# EUROPÄISCHE PATENTSCHRIFT

(11) **EP 1 620 271 B1**
(45) Veröffentlichungstag und Bekanntmachung des Hinweises auf die Patenterteilung: **27.09.2006**
(21) Anmeldenummer: 04739096.8
(22) Anmeldetag: 21.04.2004
(51) Int. Cl.: B41M 5/00, C09D 143/04

(54) **VERWENDUNG EINER PULVERFÖRMIGEN ZUSAMMENSETZUNG FÜR DIE BESCHICHTUNG VON TINTENSTRAHL-AUFZEICHNUNGSMATERIALIEN**
USE OF A POWDERY COMPOSITION FOR THE COATING OF INKJET RECORDING MATERIALS
UTILISATION D'UNE COMPOSITION PULVÉRULENTE POUR LE REVÊTEMENT DE MATÉRIAUX D'ENREGISTREMENT PAR JET D'ENCRE

(30) Priorität: 08.05.2003 DE 10320629; 15.05.2003 DE 10321941
(43) Veröffentlichungstag der Anmeldung: 01.02.2006
(73) Patentinhaber: Wacker Polymer Systems GmbH & Co. KG, 84489 Burghausen (DE)
(72) Erfinder: BACHER, Andreas, 84489 Burghausen (DE); FICKERT, Karl-Ernst, 84503 Altötting (DE); MAYER, Theo, 84387 Julbach (DE)
(74) Vertreter: Schuderer, Michael
(86) Internationale Anmeldenummer: PCT/EP2004/004233
(87) Internationale Veröffentlichungsnummer: WO 2004/098898

(56) Entgegenhaltungen:
- EP-A- 0 997 314
- EP-A- 1 127 706
- US-A1- 2001 024 713
- US-A1- 2002 094 421

## Beschreibung

Die Erfindung betrifft die Verwendung einer pulverförmigen Beschichtungsmittel-Zusammensetzung für die Beschichtung von Tintenstrahl-Aufzeichnungsmaterialien.

Polyvinylalkohole werden in Papierstreichmassen als Cobinder eingesetzt um den Glanz und den Weißgrad der Papierbeschichtung zu verbessern. Die Papierstriche, insbesondere für Inkjet-Papiere, sind einer hohen mechanischen Belastung ausgesetzt. Es wird daher gefordert, dass sich die Beschichtungen durch hohe Abriebfestigkeit auszeichnen. Zudem muss die Formulierung eine gute Tintenabsorption gewährleisten, ohne dass der Tintentropfen verläuft.

Aus der DE-A 10232666 ist bekannt, dass silanhaltige Polyvinylalkohole hochwertige Bindemittel für Streichmassen sind. In der DE-A 3519575 wird als Beschichtungsmittel, zur Herstellung einer Überzugsschicht für wärmeempfindliches Aufzeichnungspapier, eine Kombination aus silanmodifiziertem Polyvinylalkohol und kolloidaler Kieselsäure empfohlen. Die EP-A 1080940 beschreibt eine wasserresistente Beschichtungsmittel-Zusammensetzung aus silanfunktionellem Polyvinylalkohol und Titan-Chelat-Komplex.

In der JP-A 10-119430 wird zur Beschichtung von wärmeempfindlichen Aufzeichnungsmaterialien eine wässrige Lösung eingesetzt, enthaltend silanmodifizierten Polyvinylalkohol, ein Isobutylen-Maleinsäureanhydrid-Maleinimid-Terpolymer, Metallsalz und Vernetzer. Die Verwendung von silanmodifiziertem Polyvinylalkohol als Papierbeschichtungsmittel wird auch in der US-A 4617239 empfohlen, wobei der silanisierte Polyvinylalkohol in alkalischer wässriger Lösung, gegebenenfalls in Kombination mit einem wässrigen Polymerlatex, verwendet wird. Aus der EP-A 1127706 ist ein Inkjet-Aufzeichnungsmaterial bekannt, welches mit einem Gemisch aus einer wässrigen Lösung eines silanisierten Polyvinylalkohols, einem wässrigen Polymerlatex und einer Pigmentdispersion beschichtet wird.

Nachteilig bei den aus dem Stand der Technik genannten Gemischen ist die oft unzureichende Lagerstabilität der Polyvinylalkohol-Lösungen. Beim Einsatz von Mischungen aus Polyvinylalkohollösungen und Polymerdispersionen ist die gewünschte Endkonzentration, wegen des starken Viskositätsanstiegs beim Einsatz höherkonzentrierter Lösungen bzw. Dispersionen, oft nicht erreichbar.

Es bestand daher die Aufgabe, eine Beschichtungsmittel-Zusammensetzung zur Herstellung von Beschichtungen von Tintenstrahl-Aufzeichnungsmaterialien zur Verfügung zu stellen, mit welcher, sowohl auf Papier- als auch auf Kunststoff-Trägermaterialien, abriebfeste Beschichtungen erhalten werden, mit welcher ein unerwünschter Viskositätsanstieg bei der Herstellung vermieden werden kann, und mit der eine höhere Flexibilität bezüglich des Festgehalts der Streichmasse erreicht wird.

Gegenstand der Erfindung ist die Verwendung einer pulverförmigen Beschichtungsmittel-Zusammensetzung für die Beschichtung von Tintenstrahl-Aufzeichnungsmaterialien enthaltend
a) ein oder mehrere pulverförmige, silanhaltige Polyvinylalkohole auf der Basis von vollverseiften oder teilverseiften Vinylester-Copolymerisaten mit einem Hydrolysegrad von 75 bis 100 Mol-%, und
b) ein oder mehrere, in Wasser redispergierbare Polymerpulver auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide.

Die silanhaltigen Polyvinylalkohole auf der Basis von vollverseiften oder teilverseiften Vinylester-Copolymerisaten mit einem Hydrolysegrad von 75 bis 100 Mol-% sind erhältlich mittels radikalischer Polymerisation von einem oder mehreren Vinylestern von unverzweigten oder verzweigten Alkylcarbonsäuren mit 1 bis 15 C-Atomen, und von einem oder mehreren silanhaltigen, ethylenisch ungesättigten Monomeren, sowie gegebenenfalls weiteren damit copolymerisierbaren Comonomeren, und Verseifung der damit erhaltenen Polymerisate.

Geeignete silanhaltige Polyvinylalkohole sind vollverseifte oder teilverseifte Vinylester-Polymerisate mit einem Hydrolysegrad von 75 bis 100 Mol-% und einem Anteil an silanhaltigen Comonomereinheiten von 0.01 bis 10 Mol-%. Die vollverseiften Vinylester-Polymerisate haben einen Hydrolysegrad von vorzugsweise 97.5 bis 100 Mol-%, besonders bevorzugt 98 bis 99.5 Mol-%. Die teilverseiften Polyvinylester haben einen Hydrolysegrad von vorzugsweise 80 bis 95 Mol-%, besonders bevorzugt 86 bis 90 Mol-%. Die Höppler-Viskosität (nach DIN 53015 als 4 Gew.-%-ige wässrige Lösung) dient als Maß für das Molekulargewicht und für den Polymerisationsgrad der teil- oder vollverseiften, silanisierten Vinylesterpolymerisate, und beträgt vorzugsweise von 2 bis 50 mPas.

Geeignete Vinylester sind Vinylester von unverzweigten oder verzweigten Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, Vinylpivalat und Vinylester von α-verzweigten Monocarbonsäuren mit 5 bis 13 C-Atomen, beispielsweise VeoVa9^{R} oder VeoVa10^{R} (Handelsnamen der Firma Shell). Besonders bevorzugt ist Vinylacetat.

Geeignete ethylenisch ungesättigte, silanhaltige Monomere sind beispielsweise ethylenisch ungesättigte Siliciumverbindungen der allgemeinen Formel R¹SiR²₀₋₂(OR³)₁₋₃, wobei R¹ die Bedeutung CH₂=CR⁴-(CH₂)₀₋₃ oder CH₂=CR⁴CO₂(CH₂)₁₋₃ hat, R² die Bedeutung C₁₋bis C₃-Alkylrest, C₁- bis C₃-Alkoxyrest oder Halogen, vorzugsweise Cl oder Br hat, R³ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R³ gegebenenfalls durch eine Ethergruppe unterbrochen sein kann, und R⁴ für H oder CH₃ steht.

Geeignete ethylenisch ungesättigte, silanhaltige Monomere sind auch Silangruppen enthaltende Meth(acrylamide) der allgemeinen Formel CH₂= CR⁵-CO-NR⁶-R⁷-SiR⁸ₘ-(R⁹)₃₋ₘ , wobei m= 0 bis 2, R⁵ entweder H oder eine Methyl-Gruppe ist, R⁶ H oder eine Alkyl-Gruppe mit 1 bis 5 C-Atomen ist; R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können. In Monomeren, in denen 2 oder mehrere R⁵- oder R⁹- Gruppen vorkommen, können diese identisch oder unterschiedlich sein.

Beispiele für solche (Meth)acrylamido-alkylsilane sind: 3-(Meth)acrylamido-propyltrimethoxysilane, 3-(Meth)acrylamidopropyltriethoxysilane, 3-(Meth)acrylamido-propyltri(β-methoxyethoxy)silane, 2-(Meth)acrylamido-2-methylpropyltrimethoxysilane, 2-(Meth)acrylamido-2-methylethyltrimethoxysilane, N-(2-(Meth)acrylamido-ethyl)aminopropyltrimethoxysilane, 3-(Meth)-acrylamido-propyltriacetoxysilane, 2-(Meth)acrylamido-ethyltrimethoxysilane, 1-(Meth)acrylamido-methyltrimethoxysilane, 3-(Meth)acrylamido-propylmethyldimethoxysilane, 3-(Meth)acrylamido-propyldimethylmethoxysilane, 3-(N-Methyl-(Meth)acrylamido)-propyltrimethoxysilane, 3-((Meth)acrylamido-methoxy)-3-hydroxypropyltrimethoxysilane, 3-((Meth)acrylamido-methoxy)-propyltrimethoxysilane, N,N-Dimethyl-N-trimethoxysilylpropyl-3-(Meth)acrylamido-propylammoniumchlorid und N,N-Dimethyl-N-trimethoxysilylpropyl-2-(Meth)acrylamido-2-methylpropylammoniumchlorid.

Bevorzugte ethylenisch ungesättigte, silanhaltige Monomere sind γ-Acryl- bzw. γ-Methacryloxypropyltri(alkoxy)silane, α-Methacryloxymethyltri(alkoxy)silane, γ-Methacryloxypropylmethyldi (alkoxy) silane; Vinylsilane wie Vinylalkyldi(alkoxy)-silane und Vinyltri(alkoxy)silane, wobei als Alkoxygruppen beispielsweise Methoxy-, Ethoxy-, Methoxyethylen-, Ethoxyethylen-, Methoxypropylenglykolether- bzw. Ethoxypropylenglykolether-Reste eingesetzt werden können. Beispiele für bevorzugte silanhaltige Monomere sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykol-modifizierte Vinylsilane.

Als ethylenisch ungesättigte, silanhaltige Monomere werden am meisten bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische, oder Gemische von zwei oder mehreren Silanen aus der Gruppe umfassend 3-Methacryloxypropyltrimethoxysilan, Methacryloxymethyltrimethoxysilan, Vinyltrimethoxysilan, Vinyltriethoxysilan.

Die ethylenisch ungesättigten, silanhaltigen Monomere können in einer Menge von 0.01 bis 10.0 Mol-%, bevorzugt 0.01 bis 1.0 Mol-%, copolymerisiert werden.

Neben den silanhaltigen Monomeren können noch ein oder mehrere weitere Comonomere copolymerisiert werden:
1-Alkylvinylestern wie Isopropenylacetat, Ethylen, Propylen, Isobutylen, Butadien, Isopren, Chloropren, Styrol, α-Methylstyrol, Vinylchlorid, Vinylidenchlorid, Vinylfluorid, Acrylnitril, Methacrylnitril; Alkylvinylether wie Ethylvinylether, n-Butylvinylether, iso-Butylvinylether, *tert*.-Butylvinylether, Cyclohexylvinylether, Octadecylvinylether, Hydroxybutylvinylether, Cyclohexandimethanolmonovinylether; Vinylmethylketon, N-Vinylformamid, N-Vinyl-N-methylacetamid, N-Vinylcaprolactam, N-Vinylpyrrolidon, N-Vinylimidazol.
Geeignet sind auch Acrylsäure und Methacrylsäure sowie deren Ester und Amide wie Methyl(meth)acrylat, Ethyl(meth)acrylat, n-Butyl(meth)acrylat, iso-Butyl(meth)acrylat, Ethylhexyl(meth)acrylat, Benzyl(meth)acrylat, 2-Hydroxyethyl(meth)acrylat, Hydroxypropyl(meth)acrylat, n-Hexyl(meth)acrylat, Isooctyl(meth)acrylat, iso-Decyl(meth)acrylat, Lauryl(meth)acrylat, Methoxyethyl (meth) acrylat, Phenoxyethyl (meth) acrylat, Isobornyl(meth)acrylat, Stearyl(meth)äcrylat, Cyclohexyl(meth)acrylat, α-Chloracrylester, α-Cyanacrylester.
Weitere Beispiele sind Vinylcarbazol, Vinylidencyanid, Vinylester, Acrylsäureanhydrid, Maleinsäureanhydrid, Malein- und Fumarsäureester, mit Sulfonsäure modifizierte Monomere wie 2-Acrylamido-2-methyl-propansulfonsäure und deren Alkalisalze, kationische Monomere wie Trimethyl-3-(1-(meth)acrylamid-1,1-dimethylpropyl)ammoniumchlorid, Trimethyl-3-(1-(meth)acrylamidopropyl)ammoniumchlorid, 1-Vinyl-2-methylimidazol und deren quartärnisierten Verbindungen.

Die silanhaltigen Vinylester-Polymerisate können in bekannter Weise mittels Polymerisation hergestellt werden; vorzugsweise durch Substanzpolymerisation, Emulsionspolymerisation, Suspensionspolymerisation oder durch Polymerisation in organischen Lösungsmitteln, besonders bevorzugt in alkoholischer Lösung. Die Einstellung des Molekulargewichts kann in dem Fachmann bekannter Weise durch Polymerisation in Gegenwart von Molekulargewichtsreglern erfolgen. Die Verseifung der silanhaltigen Vinylester-Polymerisate erfolgt in an sich bekannter Weise, zum Beispiel nach dem Band- oder Kneterverfahren oder im Rührkessel, im Alkalischen oder Sauren unter Zugabe von Säure oder Base. Nach Abschluß der Hydrolyse wird das Lösungsmittel abdestilliert und der silanhaltige Polyvinylalkohol wird als Pulver erhalten. Die wässrige Lösung der silanhaltigen Polyvinylalkohole kann gegebenenfalls auch mittels Sprühtrocknung verdüst werden, und der silanhaltige Polyvinylalkohol als Pulver gewonnen werden. Die Herstellung pulverförmiger, silanhaltiger Polyvinylalkohole ist beispielsweise in der DE-A 10232666 detailliert beschrieben. Gängige Trocknungsverfahren sind Wirbelschicht-, Dünnschicht-, Gefrier- und Sprühtrocknung.

Für das in Wasser redispergierbare Polymerpulver b) geeignete Vinylester sind solche von Carbonsäuren mit 1 bis 15 C-Atomen. Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Bevorzugt sind Methylacrylat, Methylmethacrylat, n-Butylacrylat und 2-Ethylhexylacrylat.

Beispiele für Olefine und Diene sind Ethylen, Propylen und 1,3-Butadien. Geeignete Vinylaromaten sind Styrol und Vinyltoluol. Ein geeignetes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate;
Mischpolymerisate von Vinylacetat mit 1 bis 40 Gew.-% Ethylen;
Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von α-verzweigten Carbonsäuren mit 9 bis 13 C-Atomen wie VeoVa9, VeoVa10, VeoVa11;
Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesonders n-Butylacrylat oder 2-Ethylhexylacrylat; und
Mischpolymerisate mit 30 bis 75 Gew.-% Vinylacetat, 1 bis 30 Gew.-% Vinyllaurat oder Vinylester einer α-verzweigten Carbonsäure mit 9 bis 11 C-Atomen, sowie 1 bis 30 Gew.-% Acrylsäureester von unverzweigten oder verzweigten Alkoholen mit 1 bis 15 C-Atomen, insbesonders n-Butylacrylat oder 2-Ethylhexylacrylat, welche noch 1 bis 40 Gew.-% Ethylen enthalten;
Mischpolymerisate mit Vinylacetat, 1 bis 40 Gew.-% Ethylen und 1 bis 60 Gew.-% Vinylchlorid; wobei
die Polymerisate noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat;
Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat;
Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen;
Styrol-1,3-Butadien-Copolymerisate;
wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise -30°C bis +95°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die Herstellung der Homo- und Mischpolymerisate erfolgt in dem Fachmann bekannter Weise nach dem Massepolymerisation, Lösungspolymerisation, Fällungspolymerisation, Suspensionspolymerisation und Emulsionspolymerisation. Bevorzugt werden Lösungs-, Suspensions- und Emulsionspolymerisation.

Die Polymerisationstemperatur beträgt im allgemeinen 40°C bis 100°C, vorzugsweise 60°C bis 90°C. Bei der Copolymerisation von gasförmigen Comonomeren wie Ethylen, 1,3-Butadien oder Vinylchlorid kann auch unter Druck, im allgemeinen zwischen 5 bar und 100 bar, gearbeitet werden. Die Initiierung der Polymerisation kann mit den gebräuchlichen wasserlöslichen bzw. monomerlöslichen Initiatoren oder Redox-Initiator-Kombinationen erfolgen. Beispiele für wasserlösliche Initiatoren sind die Natrium-, Kalium- und Ammoniumsalze der Peroxodischwefelsäure, Wasserstoffperoxid, t-Butylperoxid, Kaliumperoxodiphosphat, t-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid, tert.-Butyl-peroxyneodecanoat, tert.-Butyl-peroxy-2-ethylhexanoat und tert.-Butylperoxypivalat. Die genannten Initiatoren werden im allgemeinen in einer Menge von 0.01 bis 10.0 Gew.-%, bevorzugt 0.1 bis 0.5 Gew.-%, jeweils bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat und Ascorbinsäure. Die Reduktionsmittelmenge beträgt im allgemeinen 0.01 bis 10.0 Gew.-%, bevorzugt 0.1 bis 0.5 Gew.-%, jeweils bezogen auf das Gesamtgewicht der Monomere.

Bei den als bevorzugt genannten Verfahren der Suspensions- und Emulsionspolymerisation wird in Gegenwart von oberflächenaktiven Substanzen wie Schutzkolloiden und/oder Emulgatoren polymerisiert. Geeignete Schutzkolloide sind beispielsweise teilverseifte Polyvinylalkohole, Polyvinylpyrrolidone, Polyvinylacetale, Stärken, Cellulosen und deren Carboxymethyl-, Methyl-, Hydroxyethyl-, Hydroxypropyl-Derivate. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 60 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit bis zu 60 Ethylenoxid- bzw. Propylenoxid-Einheiten.

Die Monomere können insgesamt vorgelegt werden, insgesamt zudosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Nach Abschluss der Polymerisation kann zur Restmonomerentfernung in Anwendung bekannter Methoden nachpolymerisiert werden, beispielsweise durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden. Die wässrigen Polymerdispersionen haben einen Feststoffgehalt von 30 bis 75 Gew.-%, vorzugsweise von 50 bis 60 Gew.-%.

Zur Herstellung der Polymerpulver werden die wässrigen Dispersionen gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Bei der Trocknung zu in Wasser redispergierbaren Polymerpulvern wird in der Regel eine Verdüsungshilfe in einer Gesamtmenge von 3 bis 30 Gew.-%, bezogen auf die polymeren Bestandteile der Dispersion, eingesetzt. Das heißt die Gesamtmenge an Schutzkolloid vor dem Trocknungsvorgang soll mindestens 3 bis 30 Gew.-%, bezogen auf den Polymeranteil betragen; bevorzugt werden 5 bis 20 Gew.-% bezogen auf den Polymeranteil eingesetzt.

Geeignete Verdüsungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)-acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Verdüsungshilfe eingesetzt

Bei der Verdüsung hat sich vielfach ein Gehalt von bis zu 1.5 Gew.-% Antischaummittel, bezogen auf das Basispolymerisat, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), bis zur 3-fachen Menge, bevorzugt jedoch bis zu 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Silicate mit Teilchengrößen vorzugsweise im Bereich von 10 nm bis 10 µm.

Die Viskosität der zu verdüsenden Speise wird über den Feststoffgehalt so eingestellt, dass ein Wert von < 500 mPas (Brookfield-Viskosität bei 20 Umdrehungen und 23°C), bevorzugt < 250 mPas, erhalten wird. Der Feststoffgehalt der zu verdüsenden Dispersion beträgt > 15 %, bevorzugt > 25 %.

Die pulverförmige Beschichtungsmittel-Zusammensetzung kann mittels Vermischen der pulverförmigen Komponenten a) und b) hergestellt werden. In einer bevorzugten Ausführungsform werden zur Herstellung der pulverförmigen Beschichtungsmittel-Zusammensetzung die wässrige Lösung des silanhaltigen Polyvinylalkohols a) und die wässrige Polymerdispersion des Polymers b), gegebenenfalls nach Zugabe von Schutzkolloid, gemeinsam getrocknet, besonders bevorzugt im Sprühtrocknungsverfahren.

Die Komponenten a) und b) können in einem Gewichtsverhältnis (fest/fest) von 99 : 1 bis zu 1 : 99, bevorzugt von 95 : 5 bis 20 : 80, besonders bevorzugt von 85 : 15 bis 50 : 50, am meisten bevorzugt von 60 : 40 bis 30 : 70 eingesetzt werden.

Die erfindungsgemäß hergestellten Produkte werden in Rezepturen zur Beschichtung von Trägermaterialien, aus Papier oder Kunststofffolie, für Tintenstrahl-Aufzeichnungsmaterialien, beispielsweise Inkjet-Papier und Inkjet-Folien, eingesetzt. Beispiele für geeignete Trägermaterialien sind Papier, mit Kunststoff beschichtetes Papier wie mit Polyethylen, Polypropylen oder PET beschichtetes Papier, sowie Celluloseacetat-Folien, Polyester-Folien wie PET-Folie, Polyamid-, Polycarbonat-, Polyolefin-, Polyimid-, Polyamid-, Polyvinylacetal-, Polyether- und Polysulfonamid-Folien.

Die Beschichtungsmittel können neben den Komponenten a) und b) gegebenenfalls weitere Bindemitteln und Additive zur Formulierung von Beschichtungen für Trägermaterialien für Tintenstrahl-Aufzeichnungsmaterialien enthalten, oder in Verbindung mit weiteren Bindemitteln und Additiven zur Formulierung von Beschichtungen für Trägermaterialien für Tintenstrahl-Aufzeichnungsmaterialien eingesetzt werden.

### Typische weitere Additive und Bindemittel sind:

Kationische Dispergiermittel wie Polydiallyldimethylammoniumchlorid, Benzyldimethylstearylammoniumchlorid, Dimethylstearylammoniumchlorid, Copolymere mit Acrylamid, Dimethylamin-epichlorhydrin, Polyoxyalkyl-polyamin-dicyanodiamin, Dimethylaminoethyl-methacrylat (MADAME) modifizierte Polymere, Methacryloxyethyltrimethylammoniumchlorid (MADQUAT) modifizierte Polymere, kationische Cellulosederivate, kationische Stärkederivate, kationische Polyvinylalkohole, Polyethylenimin und dessen Copolymere, Verbindungen mit trivalenten Aluminium-, Bor- und Zinkionen, Triethanolamin-Titanium-Chelatkomplex, Copolymere vom Vinylpyrrolidone, Polyamidoamine.
Bindemittel wie Hydroxyethylcellulose, Stärke, Gelatin, Casein, Polyvinylpyrrolidone, Dextran, Dextrin, Polyethylenglycole, Agar, Carrageenan, Xanthan.

Weichmacher wie Ethylenglycol, Diethylenglycol, Propylenglycol, Polyethylenglycol, Glycerin, Glycerinmonomethylether, Glycerinmonochlorhydrin, Ethylencarbonat, Propylencarbonat, Tetrachlorophthalsäureanhydrid, Tetrabromphthalsäureanhydrid, Harnstoff, Harnstoffphosphat, Triphenylphosphat, Glycerinmonostearat, Propylenglycolmonostearat, Tetramethylensulfon, N-Methyl-2-pyrrolidon, N-Vinyl-2-pyrrolidon, Sorbit.
Pigmente und Füllstoffe wie Kieselsäure, Calciumcarbonat, Clay, Bentonit, Aluminiumoxid und Titanoxid.
Entschäumer und Dispergierhilfsmittel wie Polydiallyldimethylammoniumchlorid, Benzyldimethylstearylammoniumchlorid, Dimethylstearylammoniumchlorid, sowie
Egalisiermittel, Nuancierungsfarbstoff, Netzmittel, Viskositätsstabilisator, pH-Regulierer, Härter, UV-Absorber, Oxidationsinhibitor, optische Aufheller, farbstofffixierende Mittel.

Die Rezepturen für Streichmassen für Papier- und Kunststoff-Trägermaterialien sind dem Fachmann bekannt. Zur Herstellung der Streichmassen wird die pulverförmige Beschichtungsmittel-Zusammensetzung zusammen oder in getrennten Schritten mit den übrigen Bestandteilen der Rezeptur in der erforderlichen Menge Wasser aufgenommen.

### Beispiele:

### Papierbeschichtung:

### Beispiel 1:

Produkt aus gemeinsamer Sprühtrocknung von 70 Gew.-% (fest) eines silanhaltigen vollverseiften Polyvinylalkohols mit einer Höppler-Viskosität von 6 mPas (4 %-ig in Wasser) und 30 Gew.-% (fest) einer polyvinylalkoholstabilisierten, funktionalisierten Polyvinylacetat-Dispersion, mit einer Partikelgröße von 1 µm, einem Festgehalt von 45 % und einer Brookfieldviskosität von 500 mPas (20 Umdrehungen/Minute).

### Beispiel 2:

Analog Beispiel 1, wobei der silanhaltige Polyvinylalkohol eine Höppler-Viskosität von 10 mPas (4 %-ig in Wasser) hatte.

### Beispiel 3:

Pulver/Pulver-Mischung im Gewichts-Verhältnis von 70 : 30 eines silanhaltigen vollverseiften Polyvinylalkohols mit einer Höppler-Viskosität von 20 mPas (4 %-ig in Wasser) und eines redispergierbaren Polymerpulvers, hergestellt aus einer polyvinylalkoholstabilisierten, funktionalisierten Polyvinylacetat-Dispersion, mit einer Partikelgröße von 1 µm, einem Festgehalt von 45 % und einer Brookfieldviskosität von 500 mPas (20 Umdrehungen/min).

### Beispiel 4:

Analog Beispiel 1, wobei der Speise zum Sprühtrocknen zusätzlich ein kationisches Dispergiermittel zugesetzt wurde. Das kationische Dispergiermittel wurde im Gewichtsverhältnis von Komponente a)+b) zu Dispergiermittel von 40 zu 5 beigemischt. Das Produkt wurde in der Streichmasse mit 45 Gew.-Teilen Pulvermischung und ohne zusätzliches kationisches Dispergiermittel eingesetzt.

### Vergleichsbeispiel 5:

Handelsüblicher silanhaltiger Polyvinylalkohol mit einer Höppler-Viskosität von 25 mPas (4 %-ig in Wasser)

### Vergleichsbeispiel 6:

Redispergierbares Polymerpulver, hergestellt aus einer polyvinylalkoholstabilisierten, funktionalisierten Polyvinylacetat-Dispersion, mit einer Partikelgröße von 1 µm, einem Festgehalt von 45 % und einer Brookfieldviskosität von 500 mPas (20 Umdrehungen/min).

### Vergleichsbeispiel 7:

Mischung einer wässrigen, 11 Gew.-%-igen Lösung eines silanhaltigen, vollverseiften Polyvinylalkohols mit einer Höppler-Viskosität von 20 mPas (4 %-ig in Wasser) und einer 45 Gew.-%-igen polyvinylalkoholstabilisierten funktionalisierten Polyvinylacetat-Dispersion, mit einer Partikelgröße von 1 µm und einer Brookfieldviskosität von 500 mPas (20 Umdrehungen/min).

Die Produkte aus den Beispielen und Vergleichsbeispielen wurden in nachfolgender Rezeptur für Papierstreichmassen getestet:

| | |
|---|---|
| Gefällte Kieselsäure | 100 Gew.-Teile |
| Mischung aus Bsp./V.bsp. | 40 Gew.-Teile |
| Kationisches Dispergiermittel | 5 Gew.-Teile |
| Festgehalt der Streichmasse: 30 % | |

### Rohpapier:

Geleimtes Papier mit 80 g/m² ; Strichauftrag 15 g/m²

### Testmethoden:

### Scheuertest:

Ein 4.5 cm breiter und 19 cm langer gestrichener Papierstreifen wurde in einem Scheuerprüfer der Fa. Prüfbau (System Dr. Dürner) mit einem auf einen Stempel (500 g) aufgebrachten schwarzen Tonzeichenpapier mit 50 Hüben lateral belastet.
Das resultierende schwarze Papier wurde danach optisch beurteilt, wobei die Note 1 (= 100 % schwarz; kein Abrieb) das Optimum darstellt.

### Weißgrad:

Der Weißgrad wurde mittels Remissionsmessung mit einem Filter (R 457) bestimmt und optisch beurteilt, wobei die Note 1 das Optimum darstellt.

### Testergebnisse:

| Strichanalyse | Bsp.1 | Bsp.2 | Bsp.3 | Bsp.4 | Vbsp.5 | Vbsp.6 | Vbsp.7 |
|---|---|---|---|---|---|---|---|
| Scheuertest | 1 | 1 | 1 | 1 | 2 | 5 | *) |
| Weißgrad R457 | 5.1 | 5.2 | 5.1 | 5.1 | 5.6 | 12.3 | *) |

| | | | | | | | |
|---|---|---|---|---|---|---|---|
| *) Es konnte mit den eingesetzten Lösungen keine Streichmasse mit einem Festgehalt von 30 Gew.-% hergestellt werden. Eine höher konzentrierte Lösung des modifizierten Polyvinylalkohols war nicht mehr lagerstabil. | | | | | | | |

### Kunststoffbeschichtung:

### Beispiel 8:

Produkt aus gemeinsamer Sprühtrocknung von 42 Gew.-% (fest) eines silanhaltigen vollverseiften Polyvinylalkohols mit einer Höppler-Viskosität von 6 mPas (4 %-ig in Wasser) und 58 Gew.-% (fest) einer polyvinylalkoholstabilisierten, funktionalisierten Polyvinylacetat-Dispersion, mit einer Partikelgröße von 1 µm, einem Festgehalt von 45 % und einer Brookfieldviskosität von 500 mPas (20 Umdrehungen/min).

### Beispiel 9:

Analog Beispiel 8, wobei der silanhaltige Polyvinylalkohol eine Höppler-Viskosität von 10 mPas (4 %-ig in Wasser) hatte.

### Beispiel 10:

Pulver/Pulver-Mischung im Gewichts-Verhältnis von 42 : 58 eines silanhaltigen vollverseiften Polyvinylalkohols mit einer Höppler-Viskosität von 20 mPas (4 %-ig in Wasser) und eines redispergierbaren Polymerpulvers, hergestellt aus einer polyvinylalkoholstabilisierten, funktionalisierten Polyvinylacetat-Dispersion, mit einer Partikelgröße von 1 µm, einem Festgehalt von 45 % und einer Brookfieldviskosität von 500 mPas (20 Umdrehungen/min).

### Beispiel 11:

Analog Beispiel 8, wobei der Speise zum Sprühtrocknen zusätzlich ein kationisches Dispergiermittel zugesetzt wurde. Das kationische Dispergiermittel wurde im Gewichtsverhältnis von Komponente a)+b) zu Dispergiermittel von 85 zu 8 beigemischt. Das Produkt wurde in der Streichmasse mit 93 Gew.-Teilen Pulvermischung und ohne zusätzliches kationisches Dispergiermittel eingesetzt.

### Vergleichsbeispiel 12:

Handelsüblicher silanhaltiger Polyvinylalkohol mit einer Höppler-Viskosität von 10 mPas (4 %-ig in Wasser)

### Vergleichsbeispiel 13:

Redispergierbares Polymerpulver, hergestellt aus einer polyvinylalkoholstabilisierten, funktionalisierten Polyvinylacetat-Dispersion, mit einer Partikelgröße von 1 µm, einem Festgehalt von 45 % und einer Brookfieldviskosität von 500 mPas (20 Umdrehungen/min).

### Vergleichsbeispiel 14:

Mischung einer wässrigen, 11 Gew.-%-igen Lösung eines silanhaltigen, vollverseiften Polyvinylalkohols mit einer Höppler-Viskosität von 20 mPas (4 %-ig in Wasser) und einer 45 Gew.-%-igen polyvinylalkoholstabilisierten funktionalisierten Polyvinylacetat-Dispersion, mit einer Partikelgröße von 1 µm und einer Brookfieldviskosität von 500 mPas (20 Umdrehungen/min).

Die Produkte aus den Beispielen und Vergleichsbeispielen wurden in nachfolgender Rezeptur für Streichmassen getestet:

| | |
|---|---|
| Gefällte Kieselsäure | 100 Gew.-Teile |
| Mischung aus Bsp./V.bsp. | 85 Gew.-Teile |
| Kationisches Dispergiermittel | 8 Gew.-Teile |
| Festgehalt der Streichmasse: 30 % | |

### Träger:

Mit Haftvermittler ausgestattet PET-Folie mit 90 g/m² ; Strichauftrag 15 g/m²

### Testmethoden:

### Scheuertest:

Ein 4.5 cm breiter und 19 cm langer gestrichener Folienstreifen wurde in einem Scheuerprüfer der Fa. Prüfbau (System Dr. Dürner) mit einem auf einen Stempel (500 g) aufgebrachten schwarzen Tonzeichenpapier mit 50 Hüben lateral belastet.
Das resultierende schwarze Papier wurde danach optisch beurteilt, wobei die Note 1 (= 100 % schwarz; kein Abrieb) das Optimum darstellt.

### Weißgrad:

Der Weißgrad wurde mittels Remissionsmessung mit einem Filter (R 457) bestimmt und optisch beurteilt, wobei die Note 1 das Optimum darstellt.

### Testergebnisse:

| Strichanalyse | Bsp.8 | Bsp.9 | Bsp.10 | Bsp.11 | Vbsp.12 | Vbsp.13 | Vbsp.14 |
|---|---|---|---|---|---|---|---|
| Scheuertest | 1 | 1 | 1 | 1 | 3 | 5 | *) |
| Weißgrad R457 | 5.4 | 5.3 | 5.2 | 5.3 | 7.5 | 11.8 | *) |

| | | | | | | | |
|---|---|---|---|---|---|---|---|
| *) Es konnte mit den eingesetzten Lösungen keine Streichmasse mit einem Festgehalt von 30 Gew.-% hergestellt werden. Eine höher konzentrierte Lösung des modifizierten Polyvinylalkohols war nicht mehr lagerstabil. | | | | | | | |

## Patentansprüche

1. Verwendung einer pulverförmigen Beschichtungsmittel-Zusammensetzung für die Beschichtung von Tintenstrahl-Aufzeichnungsmaterialien enthaltend
a) ein oder mehrere pulverförmige, silanhaltige Polyvinylalkohole auf der Basis von vollverseiften oder teilverseiften Vinylester-Copolymerisaten mit einem Hydrolysegrad von 75 bis 100 Mol-%, und
b) ein oder mehrere, in Wasser redispergierbare Polymerpulver auf der Basis von Homo- oder Mischpolymerisaten von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide.

2. Verwendung nach Anspruch 1, **dadurch gekennzeichnet, dass**
a) ein oder mehrere pulverförmige, silanhaltige Polyvinylalkohole auf der Basis von vollverseiften oder teilverseiften Vinylacetat-Copolymerisaten enthalten sind.

3. Verwendung nach Anspruch 1 oder 2, **dadurch gekennzeichnet, dass** die silanhaltigen Polyvinylalkohole mittels Copolymerisation von 0.01 bis 10 Mol-% von einem oder mehreren silanhaltigen Comonomeren erhalten werden aus der Gruppe umfassend ethylenisch ungesättigte Siliciumverbindungen der allgemeinen Formel R¹SiR²₀₋₂(OR³)₁₋₃, wobei R¹ die Bedeutung CH₂=CR⁴-(CH₂)₀₋₃ oder CH₂=CR⁴CO₂(CH₂)₁₋₃ hat, R² die Bedeutung C₁- bis C₃-Alkylrest, C₁- bis C₃-Alkoxyrest oder Halogen hat, R³ ein unverzweigter oder verzweigter, gegebenenfalls substituierter Alkylrest mit 1 bis 12 C-Atomen ist oder ein Acylrest mit 2 bis 12 C-Atomen ist, wobei R³ gegebenenfalls durch eine Ethergruppe unterbrochen sein kann, und R⁴ für H oder CH₃ steht, sowie Silangruppen enthaltende Meth(acrylamide) der allgemeinen Formel CH₂= CR⁵-CO-NR⁶-R⁷-SiR⁸ₘ-(R⁹)₃₋ₘ , wobei m= 0 bis 2, R⁵ entweder H oder eine Methyl-Gruppe ist, R⁶ H oder eine Alkyl-Gruppe mit 1 bis 5 C-Atomen ist, R⁷ eine Alkylen-Gruppe mit 1 bis 5 C-Atomen oder eine bivalente organische Gruppe in welcher die Kohlenstoffkette durch ein O- oder N-Atom unterbrochen wird, ist, R⁸ eine Alkyl-Gruppe mit 1 bis 5 C-Atomen ist, R⁹ eine Alkoxy-Gruppe mit 1 bis 40 C-Atomen ist, welche mit weiteren Heterocyclen substituiert sein können.

4. Verwendung nach Anspruch 1 bis 3, **dadurch gekennzeichnet, dass** b) ein oder mehrere in Wasser redispergierbare Polymerpulver enthaltend sind, auf der Basis von Homo- oder Mischpolymerisaten aus der Gruppe umfassend Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate, wobei die Polymerisate noch Hilfsmonomere enthalten können.

5. Verwendung nach Anspruch 4, **dadurch gekennzeichnet, dass** die Homo- oder Mischpolymerisate noch ein oder mehrere Hilfsmonomere enthalten, aus der Gruppe umfassend b) ethylenisch ungesättigte Mono- und Dicarbonsäuren, ethylenisch ungesättigte Carbonsäureamide und -nitrile, Mono- und Diester der Fumarsäure und Maleinsäure, Maleinsäureanhydrid, ethylenisch ungesättigte Sulfonsäuren und deren Salze, mehrfach ethylenisch ungesättigte Comonomere, Acryl-amidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether oder Ester des N-Methylolacrylamids, des N-Methylolmethacrylamids und des N-Methylolallylcarbamats, Glycidyl(meth)acrylat, (Meth)acryloxypropyltri(alkoxy)-Silane, Vinyltrialkoxysilane und Vinylmethyldialkoxysilane, wobei als Alkoxygruppen Methoxy-, Ethoxy- und Ethoxypropylenglykolether-Reste enthalten sein können, (Meth)acrylsäure- hydroxyalkylester, Diacetonacrylamid und Acetylacetoxyethyl(meth)acrylat.

6. Verwendung nach Anspruch 1 bis 5, **dadurch gekennzeichnet, dass** die pulverförmige Beschichtungsmittel-Zusammensetzung erhältlich ist, indem eine wässrige Lösung des silanhaltigen Polyvinylalkohols a) und eine wässrige Polymerdispersion des Polymers b), gegebenenfalls nach Zugabe von Schutzkolloid, gemeinsam getrocknet werden.

7. Verwendung nach Anspruch 6, **dadurch gekennzeichnet, dass** die gemeinsame Trocknung im Sprühtrocknungsverfahren erfolgt.

8. Verwendung nach Anspruch 1 bis 7, **dadurch gekennzeichnet, dass** die Komponenten a) und b) in einem Gewichtsverhältnis (fest/fest) von 95 : 5 bis 20 : 80 enthalten sind.

9. Verwendung nach Anspruch 1 bis 8 in Rezepturen zur Beschichtung von Trägermaterialien aus Papier, aus mit Kunststoff beschichtetem Papier, aus Kunststofffolie, für Tintenstrahl-Aufzeichnungsmaterialien.

10. Verwendung nach Anspruch 9, **dadurch gekennzeichnet, dass** die pulverförmige Beschichtungsmittel-Zusammensetzung zusammen oder in getrennten Schritten mit den übrigen Bestandteilen der Rezeptur in der erforderlichen Menge Wasser aufgenommen wird.

## Claims

1. Use of a powderous coating material composition for coating ink-jet recording materials, comprising
a) one or more powderous, silane-containing polyvinyl alcohols based on fully or partly hydrolyzed vinyl ester copolymers having a degree of hydrolysis of 75 to 100 mol%, and
b) one or more water-redispersible polymer powders based on homopolymers or copolymers of one or more monomers from the group consisting of vinyl esters of unbranched or branched alkylcarboxylic acids having 1 to 15 carbon atoms, methacrylic esters and acrylic esters of alcohols having 1 to 15 carbon atoms, vinyl aromatics, olefins, dienes, and vinyl halides.

2. Use according to Claim 1, **characterized in that**
a) one or more powderous, silane-containing polyvinyl alcohols based on fully or partially hydrolyzed vinyl acetate copolymers are present.

3. Use according to Claim 1 or 2, **characterized in that** the silane-containing polyvinyl alcohols are obtained by means of copolymerization of 0.01 to 10 mol% of one or more silane-containing comonomers from the group consisting of ethylenically unsaturated silicon compounds of the general formula R¹SiR²₀₋₂(OR³)₁₋₃, R¹ having the definition CH₂=CR⁴- (CH₂)₀₋₃ or CH₂=CR⁴CO₂(CH₂)₁₋₃, R² having the definition C₁ to C₃ alkyl radical, C₁ to C₃ alkoxy radical or halogen, R³ being an unbranched or branched, optionally substituted alkyl radical having 1 to 12 carbon atoms, or being an acyl radical having 2 to 12 carbon atoms, it being possible for R³ to be interrupted if appropriate by an ether group, and R⁴ being H or CH₃, and also
silane group comprised meth(acrylamides), of the general formula CH₂=CR⁵-CO-NR⁶-R⁷-SiR⁸ₘ-(R⁹)₃₋ₘ, m being 0 to 2, R⁵ being either H or a methyl group, R⁶ being H or an alkyl group having 1 to 5 carbon atoms, R⁷ is an alkylene group having 1 to 5 carbon atoms or a divalent organic group in which the carbon chain is interrupted by an oxygen or nitrogen atom, R⁸ is an alkyl group having 1 to 5 carbon atoms, R⁹ is an alkoxy group having 1 to 40 carbon atoms, which may be substituted by further heterocycles.

4. Use according to Claim 1 to 3, **characterized in that** b) one or more water-redispersible polymer powders are comprising, based on homopolymers or copolymers from the group consisting of vinyl acetate homopolymers, copolymers of vinyl acetate with ethylene, copolymers of vinyl acetate with ethylene and one or more further vinyl esters, copolymers of vinyl acetate with ethylene and acrylic ester, copolymers of vinyl acetate with ethylene and vinyl chloride, styrene-acrylic ester copolymers, and styrene-1,3-butadiene copolymers, it being possible for the polymers additionally to contain auxiliary monomers.

5. Use according to Claim 4, **characterized in that** the homopolymers or copolymers additionally contain one or more auxiliary monomers from the group consisting of b) ethylenically unsaturated monocarboxylic and dicarboxylic acids, ethylenically unsaturated carboxamides and carbonitriles, monoesters and diesters of fumaric acid and maleic acid, maleic anhydride, ethylenically unsaturated sulfonic acids and their salts, polyethylenically unsaturated comonomers, acrylamidoglycolic acid (AGA), methylacrylamidoglycolic acid methyl ester (MAGME), N-methylolacrylamide (NMA), N-methylolmethacrylamide (NMMA), N-methylolallylcarbamate, alkyl ethers or esters of N-methylolacrylamide, of N-methylolmethacrylamide, and of N-methylolallylcarbamate, glycidyl (meth)acrylate, (meth)acryloyloxypropyltri(alkoxy)silanes vinyltrialkoxysilanes, and vinylmethyldialkoxysilanes, alkoxy groups that may be present being methoxy, ethoxy, and ethoxypropylene glycol ether radicals, (meth)acrylic acid hydroxyalkyl esters, diacetoneacrylamide, and acetylacetoxyethyl (meth)acrylate.

6. Use according to Claim 1 to 5, **characterized in that** the powderous coating material composition is obtainable by jointly drying an aqueous solution of the silane-containing polyvinyl alcohol a) and an aqueous polymer dispersion of the polymer b), following addition of protective colloid if appropriate.

7. Use according to Claim 6, **characterized in that** the joint drying takes place by a spray-drying process.

8. Use according to Claim 1 to 7, **characterized in that** components a) and b) are present in a weight ratio (solids/solids) of 95:5 to 20:80.

9. Use according to Claim 1 to 8 in formulas for coating substrate materials of paper, of polymer-coated paper, of polymeric film, for ink-jet recording materials.

10. Use according to Claim 9, **characterized in that** the powderous coating material composition is taken up together or in separate steps with the remaining constituents of the formula in the requisite amount of water.

## Revendications

1. Utilisation d'une composition pulvérulente de matériau de revêtement pour le revêtement de matériaux d'enregistrement à jet d'encre, comprenant
a) un ou plusieurs alcools polyvinyliques pulvérulents renfermant du silane, à base de copolymères d'esters vinyliques totalement hydrolysés ou partiellement hydrolysés, présentant un degré d'hydrolyse de 75 à 100 % en moles, et
b) une ou plusieurs poudres polymères redispersables dans l'eau à base d'homopolymères ou de copolymères d'un ou de plusieurs monomères parmi le groupe constitué d'esters vinyliques d'acides alkylcarboxyliques non ramifiés ou ramifiés, renfermant de 1 à 15 atomes de carbone, d'esters méthacryliques et d'esters acryliques d'alcools renfermant de 1 à 15 atomes de carbone, de composés vinylaromatiques, d'oléfines, de diènes et d'halogénures de vinyle.

2. Utilisation selon la revendication 1, **caractérisée en ce que**
a) un ou plusieurs alcools polyvinyliques pulvérulents renfermant du silane, à base de copolymères d'acétate vinylique totalement hydrolysés ou partiellement hydrolysés sont présents.

3. Utilisation selon la revendication 1 ou 2, **caractérisée en ce que** les alcools polyvinyliques renfermant du silane sont obtenus par copolymérisation de 0,01 à 10 % en moles d'un ou de plusieurs comonomères renfermant du silane parmi le groupe constitué de composés siliciés éthyléniquement insaturés de formule générale R¹SiR²₀₋₂(OR³)₁₋₃, dans laquelle R¹ représente un groupe CH₂=CR⁴-(CH₂)₀₋₃ ou un groupe CH₂=CR⁴CO₂(CH₂)₁₋₃, R² représente un radical alkyle en C₁ à C₃, un radical alcoxy en C₁ à C₃ ou un atome d'halogène, R³ représente un radical alkyle non ramifié ou ramifié, éventuellement substitué, renfermant de 1 à 12 atomes de carbone, ou un radical acyle renfermant de 2 à 12 atomes de carbone, où R³ peut être éventuellement interrompu par un groupe éther, et R4 représente un atome d'hydrogène ou un groupe CH₃, ainsi que
de méth(acrylamides) renfermant des groupes silane, de formule générale CH₂=CR⁵-CO-NR⁶-R⁷-SiR⁸ₘ-(R⁹)₃₋ₘ, dans laquelle m vaut de 0 à 2, R⁵ représente soit un atome d'hydrogène, soit un groupe méthyle, R⁶ représente soit un atome d'hydrogène, soit un groupe alkyle renfermant de 1 à 5 atomes de carbone, R⁷ représente un groupe alkylène renfermant de 1 à 5 atomes de carbone ou un groupe organique bivalent dans lequel la chaîne carbonée est interrompue par un atome d'oxygène ou un atome d'azote, R⁸ représente un groupe alkyle renfermant de 1 à 5 atomes de carbone, R⁹ représente un groupe alcoxy renfermant de 1 à 40 atomes de carbone, qui peuvent être interrompus par des hétérocycles supplémentaires.

4. Utilisation selon les revendications 1 à 3, **caractérisée en ce que** b) une ou plusieurs poudres polymères redispersables dans l'eau sont présentes, à base d'homopolymères ou de copolymères parmi le groupe constitué d'homopolymères d'acétate de vinyle, de copolymères d'acétate de vinyle avec de l'éthylène, de copolymères d'acétate de vinyle avec de l'éthylène et un ou plusieurs esters vinyliques supplémentaires, de copolymères d'acétate de vinyle avec de l'éthylène et un ester acrylique, de copolymères d'acétate de vinyle avec de l'éthylène et du chlorure de vinyle, de copolymères styrène/ester acrylique, de copolymères styrène/1,3-butadiène, où les polymères peuvent également comprendre des monomères auxiliaires.

5. Utilisation selon la revendication 4, **caractérisée en ce que** les homopolymères ou les copolymères comprennent également un ou plusieurs monomères auxiliaires parmi le groupe comprenant b) des acides monocarboxyliques et dicarboxyliques éthyléniquement insaturés, des carboxamides et des carbonitriles éthyléniquement insaturés, des monoesters et des diesters de l'acide fumarique et de l'acide maléique, l'anhydride maléique, des acides sulfoniques éthyléniquement insaturés et leurs sels, des comonomères polyéthyléniquement insaturés, l'acide acrylamidoglycolique (AGA), l'ester méthylique de l'acide méthylacrylamidoglycolique (MAGME), le N-méthylolacrylamide (NMA), le N-méthylolméthacrylamide (NMMA), le carbamate de N-méthylolallyle, des éthers ou des esters alkyliques du N-méthylolacrylamide, du N-méthylolméthacrylamide et du carbamate de N-méthylolallyle, le (méth)acrylate de glycidyle, des (méth)acryloxypropyltri(alcoxy)silanes, des vinyltrialcoxysilanes et des vinylméthyldialcoxysilanes, où des radicaux méthoxy, éthoxy et éthoxypropylèneglycoléther peuvent être présents en tant que groupes alcoxy, des esters hydroxyalkyliques de l'acide (méth)acrylique, le diacétoneacrylamide et le (méth)acrylate d'acétylacétoxyéthyle.

6. Utilisation selon les revendications 1 à 5, **caractérisée en ce que** la composition pulvérulente de matériau de revêtement peut être obtenue en séchant conjointement une solution aqueuse de l'alcool polyvinylique renfermant du silane a) et une dispersion polymère aqueuse du polymère b), éventuellement après l'addition d'un colloïde protecteur.

7. Utilisation selon la revendication 6, **caractérisée en ce que** le séchage conjoint est réalisé dans un procédé de séchage par pulvérisation.

8. Utilisation selon les revendications 1 à 7, **caractérisée en ce que** les composants a) et b) sont présents en un rapport pondéral (solide/solide) de 95:5 à 20:80.

9. Utilisation selon les revendications 1 à 8 dans des formulations destinées au revêtement de matériaux de support composés de papier, de papier revêtu d'une matière plastique, d'une feuille plastique, pour des matériaux d'enregistrement à jet d'encre.

10. Utilisation selon la revendication 9, **caractérisée en ce que** la composition pulvérulente de matériau de revêtement est reprise conjointement ou dans des étapes séparées avec les autres constituants de la formulation dans la quantité d'eau nécessaire.
